# EUROPÄISCHE PATENTSCHRIFT

(11) **EP 1 429 906 B1**
(45) Veröffentlichungstag und Bekanntmachung des Hinweises auf die Patenterteilung: **20.04.2005**
(21) Anmeldenummer: 02758141.2
(22) Anmeldetag: 10.08.2002
(51) Int. Cl.: B29C 47/90

(54) **FORMBACKENHÄLFTE FÜR EINEN CORRUGATOR ZUM HERSTELLEN VON QUERRIPPENROHREN**
MOBILE IMPRESSION HALF-MOULD FOR A CORRUGATOR FOR MAKING PIPES WITH TRANSVERSE RIBS
MOITIE DE MOULE A EMPREINTES MOBILES POUR UNE ONDULEUSE DESTINEE A LA FABRICATION DE TUYAUX A NERVURES TRANSVERSALES

(30) Priorität: 29.09.2001 DE 10148294
(43) Veröffentlichungstag der Anmeldung: 23.06.2004
(73) Patentinhaber: UNICOR GmbH Rahn Plastmaschinen, D-97437 Hassfurt (DE)
(72) Erfinder: NEUBAUER, Gerhard, 97486 Königsberg (DE); KAUFMANN, Klaus, 97437 Hassfurt (DE)
(74) Vertreter: LOUIS- PÖHLAU- LOHRENTZ
(86) Internationale Anmeldenummer: PCT/DE2002/002949
(87) Internationale Veröffentlichungsnummer: WO 2003/031155

(56) Entgegenhaltungen:
- EP-A- 0 435 446
- DE-C- 19 946 571
- US-A- 3 784 346
- US-B1- 6 457 965

## Beschreibung

Die Erfindung betrifft eine Formbackenhälfte für einen Corrugator zum Herstellen von Querrippenrohren, wie sie beispielsweise als Installationsrohre zur Anwendung gelangen.

Die DE 200 09 030 U1 offenbart eine Formbackenhälfte für einen Corrugator zum Herstellen von Querrippenrohren, wobei die Formbackenhälfte zwei voneinander beabstandete, in einer gemeinsamen Ebene angeordnete Stimflächen und eine die beiden Stimflächen verbindende halbzylinderartige Grundfläche aufweist. Die halbzylinderartige Grundfläche der Formbackenhälfte ist mit sich in axialer Richtung abwechselnden Kämmen und Mulden bzw. Rinnen ausgebildet. An den Kämmen und in den Rinnen sind halbkreisbogenförmige Einsatz-Formelemente loslösbar angebracht, die jeweils zwei sich diametral gegenüberliegende Formelement-Stimflächen aufweisen, die mit den Stirnflächen der Formbackenhälften plan fluchten, wenn sie genau richtig angeordnet werden. Bei dieser bekannten Formbackenhälfte sind die halbkreisbogenförmigen Einsatz-Formelemente in ihrer Umfangsrichtung beweglich geführt, so daß sie aus der jeweiligen Stimfläche der Formbackenhälfte in unerwünschter Weise vorstehen können.

Die EP 0 544 680 B1 offenbart eine Vorrichtung, d.h. einen Corrugator zur Extrusion von Rohren aus thermoplastischem Material mit glatten Innen- und Außenwandungen, die frei von jeglichen vorstehenden Rippen sind, deren Höhe größer ist als die Stärke des Rohres. Diese Vorrichtung weist Formblöcke auf, die einen vorwärtswandernden Formtunnel zur Formung des Rohres auf. Der Formtunnel weist ein stromaufwärts liegendes Ende und ein stromabwärtsliegendes Ende und einen sich zwischen diesen Enden erstreckenden zylindrischen Tunnellängskanal auf. Die Formblöcke dieser bekannten Vorrichtung werden durch zusammenwirkende Formblockteile gebildet, die am stromaufwärtsliegenden Ende des Formtunnels schließen, um einen geschlossenen Formblock mit einer Formblockbohrung auszubilden, die einen Teil des Tunnellängskanals bildet. Die Formblockteile öffnen sich am stromabwärts liegenden Ende des Formtunnels, um das innerhalb des Formlängskanals geformte Rohr freizugeben. Die zylindrischen Bohrungswandungen der Formblöcke und damit die Wandung der Tunnelbohrung sind zur Unterstützung des Transportes des geformten Rohres mit flachen Wellungen versehen. Die Tiefe der Wellungen ist klein im Vergleich zur Stärke des Rohres und die Weite derselben ist größer als die Tiefe. Die Wellungen weisen abwechselnd flache Nuten und Rücken auf, wobei die Weite der Nuten mindestens so groß ist wie die der Rücken. Die Nuten und die Rücken weisen ein rechteckiges Querschnittsprofil auf. Die Ecken der Nuten und Rücken können abgerundet sein oder eine krummlinige Kontur aufweisen.

Ein Corrugator zur Herstellung von Rohren, insbesondere von Well- d.h. Querrippenrohren, mit wenigstens zwei Folgen von umlaufenden Formbacken, die entlang eines vorgegebenen Abschnittes einen Formkanal bilden, ist aus der DE 199 14 974 A1 bekannt. Die Formbacken-Folgen sind in zugehörigen Umlaufführungen geführt. Es ist wenigstens ein Wechselformbacken mit einer anderen Rohrformausprägung vorgesehen, wobei wenigstens eine Wechseleinrichtung entlang wenigstens einer der Umlaufführungen vorgesehen ist.

Die EP 0 435 446 A2 beschreibt Formbackenhälften für einen Corrugator zur Herstellung von Querrippenrohren mit einer Vielzahl von Subblöcken, die miteinander fest verbunden sind. Jeder Subblock weist eine bogenförmige Formfläche auf, die nicht mehr als eine Wellenlänge aus Rippen und Rillen besitzt. Jeder Subblock weist außerdem zwei in Längsrichtung voneinander beabstandete Endflächen auf. An einer Endfläche jedes Subblockes ist ein Vakuumkanal vorgesehen. Im zusammengebauten Zustand der Subblöcke bilden die Vakuumkanäle zu Formrinnen Vakuumdurchgänge, die mit einer externen Vakuumquelle strömungstechnisch verbindbar sind.

Die US-A 3 784 346 und die US-A 3 864 446 offenbaren Corrugatoren bzw. Formbackenhälften für Corrugatoren, wobei die jeweilige Formbackenhälfte zwei voneinander beabstandete, in einer gemeinsamen Ebene angeordnete Stirnflächen und eine die beiden Stirnflächen verbindende halbzylinderartige Grundfläche aufweist, an der die Außenoberfläche des herzustellenden Querrippenrohres bestimmende Einsatz-Formelemente angebracht sind. Bei diesen Einsatz-Formelementen handelt es sich um relativ kurze Elemente, um die Rippen des herzustellenden Querrippenrohres mit entsprechend kurzen Vertiefungen zu gestalten.

Die DE 199 46 571 C1 beschreibt eine Vorrichtung zum Herstellen von Querrippenrohren. Die Vorrichtung weist Formbackenhälften auf, die sich entlang zweier in sich geschlossener Bahnen bewegen und eine gemeinsame Formstrecke und zwei Rückführstrecken bilden. An den beiden Rückführstrecken ist jeweils eine Dreheinrichtung vorgesehen, an der sich mittels einer Halte- und Freigabeeinrichtung zwei Formbackenhälften befinden. Eine dieser Formbackenhälften weist eine Muffenkontur auf, um mit dieser Vorrichtung Querrippenrohr mit Muffen herstellen zu können.

Aus der WO 93/25 373 ist ein Corrugator mit einen gemeinsamen Formtunnel bildenden Formbackenhälften bekannt, wobei der Formtunnel eine Anzahl Formhohlräume aufweist, die zueinander parallel vorgesehen sind. Die Formhohlräume sind mit einer Vakuumquelle verbunden, wobei das Vakuum in jedem Formhohlraum unabhängig steuerbar ist.

Vorrichtungen, d.h. Corrugatoren, zum Herstellen von Querrippenrohren mit Formbackenhälften, die zwei voneinander beabstandete und in einer gemeinsamen Ebene angeordnete Stirnflächen sowie eine die beiden Stimflächen verbindende halbzylinderartige Grundfläche aufweisen, sind beispielsweise auch aus der DE 197 02 637 C1, DE 197 02 645 C1 und DE 197 02 547 C1 bekannt.

Eine Vorrichtung, d.h. ein Corrugator, zur Herstellung eines Querrippenrohres, das in seiner Längsrichtung öffenbar und wieder verschließbar ist, ist in der DE 199 16 641 A1 beschrieben. Das mit dieser bekannten Vorrichtung hergestellte Querrippenrohr ist zu diesem Zwecke mit einem Hakenprofil und mit einem Widerhakenprofil ausgebildet, die in Längsrichtung des Wellrohres verlaufen. Der Corrugator dieser bekannten Vorrichtung weist erste und zweite Formbackenhälften auf, wobei die ersten Formbackenhälften jeweils mit einer radial abgestuften Längsausnehmung ausgebildet sind, die eine erste Ausnehmung zur Ausbildung des Hakenprofiles und die eine zweite Ausnehmung zur Aufnahme eines Einsatzes aufweist. Der Einsatz ist an seiner Innenstirnseite zur Ausbildung des Widerhakenprofiles mit einer Längsrinne ausgebildet.

Die DE 199 22 726 A1 offenbart eine Vorrichtung zur Herstellung von Querrippenrohren. Diese bekannte Vorrichtung weist Halbkokillen auf. Die Halbkokillen weisen jeweils einen Grundkörper auf, der aus einem Metall mit höherer Wärmeleitfähigkeit und geringerem spezifischen Gewicht als Stahl besteht. Der jeweilige Grundkörper ist zur Aufnahme eines Kernes, d.h. einer Formbackenhälfte, vorgesehen. Die jeweilige Formbackenhälfte weist zwei voneinander beabstandete und in einer gemeinsamen Ebene angeordnete Stimflächen und eine die beiden Stirnflächen verbindende halbzylinderartige Grundfläche auf. Die halbzylinderartigen Grundflächen bilden entlang eines gemeinsamen Formkanals eine Formausnehmung, in der die Querrippenrohre geformt werden. Die Formbackenhälften sind mit Vakuumkanälen ausgebildet. Zur Herstellung von Querrippenrohren unterschiedlicher Gestalt sind jeweils eigene Formbackenhälften erforderlich.

Der Erfindung liegt die Aufgabe zugrunde, eine Formbackenhälfte für einen Corrugator zum Herstellen von Querrippenrohren zu schaffen, wobei die Formbackenhälften mit Einsatz-Formelementen kombinierbar bzw. kombiniert sind, die an der jeweiligen Formbackenhälfte auf einfache Weise sehr zuverlässig positionierbar und festlegbar sind.

Diese Aufgabe wird erfindungsgemäß durch die Merkmale des Anspruches 1 gelöst. Bevorzugte Aus- bzw. Weiterbildungen der erfindungsgemäßen Formbackenhälfte sind in den Unteransprüchen gekennzeichnet.

Im allgemeinen ist bei Formbackenhälften für einen Corrugator zum Herstellen von Querrippenrohren die die beiden Stimflächen der Formbackenhälfte verbindende halbzylinderartige Grundfläche selbst direkt und unmittelbar der Außenoberfläche des herzustellenden Querrippenrohres entsprechend mit Querrippen und Querrinnen ausgebildet, die sich in axialer Richtung der Formbackenhälfte abwechseln. Derartig gestaltete Formbackenhälften eigenen sich also nur zur Herstellung von Querrippenrohren eines bestimmten Rohrdurchmessers und einer bestimmten Längswelligkeit. Demgegenüber offenbart beispielsweise die zuerst genannte DE 200 09 030 U1 eine Formbackenhälfte mit Einsatz-Formelementen, um durch Wahl der jeweils passenden Einsatz-Formelemente in Kombination mit der jeweils zugehörigen Formbackenhälfte Querrippenrohre mit verschiedenen Rohrdurchmessern und/oder mit verschiedenen Längsprofilierungen herstellen zu können. Bei dieser bekannten Formbackenhälfte sind die Einsatz-Formelemente jedoch nur gegen eine ungewollte Bewegung in radialer Richtung, d.h. radial, zentral in den Formkanal hinein, gesichert, wenn die Formbackenhälfte und die zugehörigen Einsatz-Formelemente miteinander beispielsweise durch Schwalbenschwanzverbindungen o.dgl. formschlüssig temporär verbunden sind. Durch diese formschlüssige Verbindung ist jedoch eine Beweglichkeit des jeweiligen Einsatz-Formelementes in seiner Umfangsrichtung nicht vermeidbar, was bedeutet, daß es entlang der gemeinsamen Formstrecke des Corrugators bzw. insbesondere entlang seines Einlauf- bzw. Anfangsabschnittes zu Beschädigungen von aus der jeweiligen Formbackenhälfte vorstehenden Einsatz-Formelementen kommen kann. Hier schafft die Erfindung mit einer Formbackenhälfte für einen Corrugator zum Herstellen von Querrippenrohren Abhilfe, wobei die Formbackenhälfte zwei voneinander beabstandete, in einer gemeinsamen Ebene angeordnete Stirnflächen und eine die beiden Stirnflächen verbindende halbzylinderartige Grundfläche aufweist, an der die Außenoberfläche des Querrippenrohres bestimmende halbkreisbogenförmige Einsatz-Formelemente loslösbar angebracht sind, die jeweils zwei sich diametral gegenüberliegende Formelement-Stimflächen aufweisen, die mit den Stimflächen der Formbackenhälfte plan fluchten, wobei jede der beiden Stirnflächen der Formbackenhälfte an die halbzylinderartige Grundfläche angrenzend mit einer der Anzahl Einsatz-Formelemente entsprechenden Anzahl ersten Aussparungen und die beiden Formelement-Stirnflächen des jeweiligen Einsatz-Formelementes an die beiden Stimflächen der Formbackenhälfte angrenzend mit jeweils einer zweiten Aussparung ausgebildet sind, wobei sich zwischen der jeweiligen ersten Aussparung und der zugehörigen zweiten Aussparung, zum Festlegen des jeweiligen Einsatz-Formelementes an der Formbackenhälfte, ein Fixierelement erstreckt. Mit Hilfe des jeweiligen Fixierelementes wird das zugehörige Einsatz-Formelement an der halbzylinderartigen Grundfläche der Formbackenhälfte loslösbar festgelegt, so daß die Einsatz-Formelemente zuverlässig daran gehindert werden, ungewollt aus einer Stirnfläche der entsprechenden Formbackenhälfte vorzustehen. Die solchermaßen ausgebildete Formbackenhälfte weist außerdem den Vorteil auf, daß einzelne Einsatz-Formelemente einfach und zeitsparend durch andere Einsatz-Formelemente ersetzt werden können, um die Formbackenhälften eines Corrugators mit relativ geringen Umrüstzeiten zur Herstellung von Querrippenrohren eines bestimmten Rohrdurchmessers und einer bestimmten Längswelligkeit umrüsten zu können.

Bei der erfindungsgemäßen Formbackenhälfte kann die halbzylinderartige Grundfläche der Formbackenhälfte mit sich in axialer Richtung abwechselnden Kämmen und Rinnen ausgebildet sein, wobei an den Kämmen erste Einsatz-Formelemente mit einer konvexen Querschnitts-Randkontur und in den Rinnen zweite Einsatz-Formelemente mit einer konkaven Querschnitt-Randkontur loslösbar angebracht sein können. Dabei können die ersten und die zweiten Querschnitts-Randkonturen aneinander direkt und unmittelbar angrenzen, eine andere Möglichkeit besteht darin, daß die ersten und die zweiten Querschnitt-Randkonturen der ersten und zweiten Einsatz-Formelemente voneinander jeweils einen bestimmten Abstand aufweisen, der durch entsprechende Abschnitt der jeweiligen Formbackenhälfte überbrückt ist. Während im zuerst genannten Falle also die ersten und zweiten Einsatz-Formelemente allein die Außenoberfläche des herzustellenden Querrippenrohres bestimmen, bestimmen bei der zuletzt beschriebenen Ausbildung die ersten und zweiten Einsatzformelemente gemeinsam mit den diese überbrückenden Abschnitte der jeweiligen Formbackenhälfte die Außenoberfläche des herzustellenden Querrippenrohres.

Eine andere Möglichkeit besteht bei der erfindungsgemäßen Formbackenhälfte darin, daß die halbzylinderartige Grundfläche der Formbackenhälfte einfach halbzylindrisch mit voneinander axial beabstandeten Rillen geringer Tiefe ausgebildet ist, wobei jeder Rille ein Einsatz-Formelement zugeordnet ist. Dabei kann jedes Einsatz-Formelement axial mittig eine konvexe Querschnitt-Rippenrandkontur und an diese beidseitig anschließend jeweils eine halbe konkave Querschnitt-Rinnenrandkontur aufweisen. Damit sind beispielsweise Querrippenrohre mit mindestens annähernd äquidistant voneinander beabstandeten Querrippen und Querrinnen mit mindestens annähernd gleichen axialen Abmessungen herstellbar. Es ist jedoch auch möglich, daß zwischen Einsatz-Formelementen, die eine konvexe Querschnitt-Rippenrandkontur und an diese beidseitig anschließend jeweils eine halbe konkave Querschnitt-Rippenrandkontur aufweisen, mindestens ein Halbring-Formelement vorgesehen ist, wobei das mindestens eine Halbring-Formelement an das benachbarte Einsatz-Formelement mit konvexer Querschnitt-Rippenrandkontur stufenlos anschließt. Mit einer solchermaßen ausgebildeten Formbackenhälfte sind Rippenrohre mit Querrinnen realisierbar, die voneinander im Vergleich mit der lichten Rinnenbreite einen großen axialen Rinnenabstand besitzen.

Vorteilhaft ist es, wenn jedes Einsatz-Formelement rückseitig mit einem Befestigungsorgan ausgebildet ist, das in eine daran querschnittsmäßig angepaßte Befestigungsrinne in der halbzylinderartigen Grundfläche der Formbackenhälfte eingepaßt ist. Besonders vorteilhaft ist es hierbei, wenn das Befestigungsorgan und die daran formmäßig angepaßte Befestigungsrinne einfach rechteckförmig ausgebildet sind, weil es dann möglich ist, das jeweilige Einsatz-Formelement einfach in die halbzylinderartige Grundfläche der Formbackenhälfte von der Seite her einzustellen ohne daß es erforderlich ist, das halbkreisbogenförmige Einsatz-Formelement in seiner Umfangsrichtung in die zugehörige Befestigungsrinne in der Formbackenhälfte einzuführen. Der Zeit- und Arbeitsaufwand zur Kombination der Formbackenhälfte mit Einsatz-Formelementen ist folglich entsprechend gering. Selbstverständlich ist es auch möglich, das Befestigungsorgan des jeweiligen Einsatz-Formelementes und die jeweilige, daran formmäßig angepaßte Befestigungsrinne in der halbzylinderartigen Grundfläche der Formbackenhälfte mit Hinterschneidungen beispielsweise in Gestalt von Schwalbenschwanzführungen auszubilden.

Die Einsatz-Formelemente sind zweckmäßigerweise mit Vakuumschlitzen und die jeweilige Formbackenhälfte ist zweckmäßigerweise mit einem Vakuumkanalsystem ausgebildet. Das Vakuumkanalsystem ist mit den Vakuumschlitzen strömungstechnisch verbunden. Hierbei kann das Vakuumkanalsystem mindestens einen aus einer der Stirnflächen der Formbackenhälfte ausmündenden, mit einer Vakuumquelle verbindbaren ersten Kanalabschnitt und mindestens einen mit diesem verbundenen zweiten Kanalabschnitt aufweisen, der in die Vakuumschlitze ausmündet.

Weitere Einzelheiten, Merkmale und Vorteile ergeben sich aus der nachfolgenden Beschreibung von in der Zeichnung dargestellten Ausführungsformen der erfindungsgemäßen Formbackenhälfte für einen zum Herstellen von Querrippenrohren vorgesehenen Corrugator.

Es zeigen:
- Figur 1: in einer perspektivischen Ansicht einen Abschnitt einer ersten Ausbildung der Formbackenhälfte zur Herstellung eines Querrippenrohres,
- Figur 2: einen Querschnitt durch den Abschnitt der Formbackenhälfte gemäß Figur 1,
- Figur 3: das Detail III in Figur 2 in einem größeren Maßstab,
- Figur 4: eine Vorderansicht der Formbackenhälfte gemäß Figur 1 in Blickrichtung des Pfeiles IV - ohne die die Einsatzform-Elemente an der Formbackenhälfte unbeweglich fixierenden Fixierelemente,
- Figur 5: eine der Figur 4 entsprechende Vorderansicht mit den Fixierelementen zum Fixieren der Einsatz-Formelemente an der Formbackenhälfte,
- Figur 6: eine der Figur 4 prinzipiell ähnliche Vorderansicht einer anderen Ausführungsform der Formbackenhälfte mit Einsatz-Formelementen zur Realisierung eines Querrippenrohres mit Querrinnen, die im Vergleich zum axialen Abstand benachbarter Querrinnen eine kleine axiale lichte Weite besitzen,
- Figur 7: die Formbackenhälfte gemäß Figur 6 - ähnlich wie die Formbackenhälfte gemäß Figur 5, wobei auch die die Einsatz-Formelemente an der Formbackenhälfte fixierenden Fixierelemente dargestellt sind,
- Figur 8: eine räumliche Darstellung einer Ausbildung der Formbackenhälfte mit Einsatz-Formelementen, wobei die halbzylinderartige Grundflächeder Formbackenhälfte einfach halbzylindrisch mit voneinander axial beabstandeten Rillen ausgebildet ist,
- Figur 9: die Formbackenhälfte gemäß Figur 8, wobei ein Einsatz-Formelement von der Formbackenhälfte räumlich beabstandet, d.h. in einer Explosionsdarstellung gezeichnet ist,
- Figur 10: eine der Figur 9 prinzipiell ähnliche perspektivische Explosionsdarstellung einer Ausbildung der Formbackenhälfte, wobei zwischen zwei axial äußeren Einsatz-Formelementen mit einer Rippenrandkontur ein Einsatz-Formelement vorgesehen ist, das als Halbring-Formelement - ohne Rippenkontur - gestaltet ist,
- Figur 11: eine Formbackenhälfte zur Herstellung eines Querrippenrohresähnlich der in Figur 7 abschnittweise dargestellten Formbackenhälfte, wobei die halbzylinderartige Grundfläche der Formbackenhälfte jedoch - wie bei den Ausbildungen gemäß den Figuren 8 bis 10 - einfach halbzylindrisch mit voneinander axial beabstandeten Rillen ausgebildet ist,
- Figur 12: das Detail XII gemäß Figur 11 in einem größeren Maßstab,
- Figur 13: eine räumliche Darstellung einer Formbackenhälfte ähnlich der in Figur 1 gezeichneten Formbackenhälfte, wobei die Einsatz-Formelemente mit Vakuumschlitzen ausgebildet sind,
- Figur 14: eine Darstellung des Details XIV in Figur 13 in einem größeren Maßstab,
- Figur 15: eine Vorderansicht einer Formbackenhälfte ähnlich den Formbackenhälften gemäß den Figuren 8 bis 10, wobei die Einsatz-Formelemente mit Vakuumschlitzen ausgebildet sind,
- Figur 16: einen Schnitt entlang der Schnittlinie XVI-XVI in Figur 15 durch die Formbackenhälfte mit ihren Einsatz-Formelementen und den die Einsatz-Formelemente in der Formbackenhälfte fixierenden Fixierelementen,
- Figur 17: das Detail XVII gemäß Figur 16 in einem größeren Maßstab,
- Figur 18: eine der Figur 15 ähnliche Darstellung einer Ausbildung der Formbackenhälfte, wobei die Vakuumschlitze sich jedoch entlang der gesamten Umfangserstreckung der Einsatz-Formelemente erstrecken,
- Figur 19: einen Schnitt entlang der Schnittlinie XIX-XIX in Figur 18, und
- Figur 20: einen Schnitt entlang der Schnittlinie XX-XX in Figur 18.

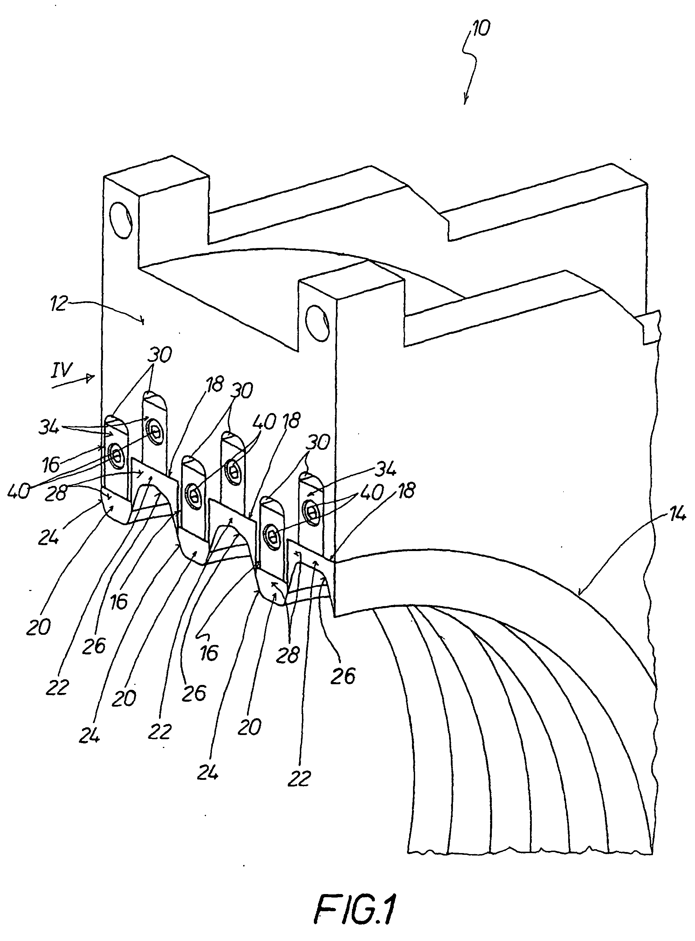

Figur 1 zeigt in einer perspektivischen Ansicht einen Abschnitt einer Ausbildung der Formbackenhälfte 10 für einen zum Herstellen von Querrippenrohren vorgesehenen Corrugator. Die Formbackenhälfte 10 weist zwei voneinander beabstandete Stirnflächen 12 auf, die in einer gemeinsamen Ebene vorgesehen sind. In Figur 1 ist nur eine dieser Stimflächen 12 dargestellt. Die Formbackenhälfte 10 weist außerdem eine halbzylinderartige Grundfläche 14 auf, die sich zwischen den beiden Stirnflächen 12 erstreckt, d.h. diese miteinander verbindet. Die halbzylinderartige Grundfläche 14 der Formbackenhälfte 10 ist mit Kämmen 16 und Rinnen 18 ausgebildet, die sich in axialere Richtung der Formbackenhälfte 10 abwechseln. An den Kämmen 16 sind Einsatz-Formelemente 20 angebracht. In den Rinnen 18 sind zweite Einsatz-Formelemente 22 angebracht. Die Einsatz-Formelemente 20 sind mit einer konvexen Querschnitt-Randkontur 24 und die Einsatz-Formelemente 22 sind mit einer konkaven Querschnitt-Randkontur 26 ausgebildet. Die Kämme 16 und die Rinnen 18 der halbzylinderartigen Grundfläche 14 der Formbackenhälfte 10 und die konvexe Querschnitt-Randkontur 24 der Einsatz-Formelemente 20 und die konkave Querschnitt-Randkontur 26 der Einsatz-Formelemente 22 sind derartig gestaltet, daß die Querschnitt-Randkonturen 24 und 26 aneinander direkt und unmittelbar stufenlos angrenzen. Durch die Randkonturen 24 und 26 der Einsatz-Formelemente 20 und 22 ist die Außenoberfläche des herzustellenden Querrippenrohres bestimmt.

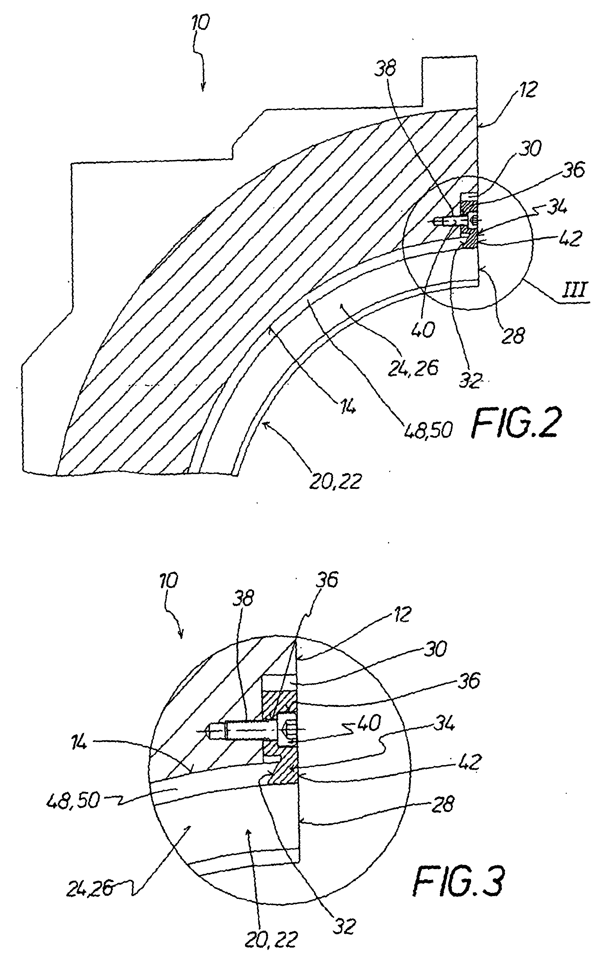

Wie insbesondere auch aus den Figuren 2 und 3 ersichtlich ist, sind die Einsatz-Formelemente 20 und 22 mit Stirnflächen 28 ausgebildet, die sich diametral gegenüberliegen und in einer gemeinsamen Ebene liegen. Die Stirnflächen 28 der Einsatz-Formelemente 20 und 22 fluchten mit den Stirnflächen 12 der Formbackenhälfte 10 plan, d.h. sie spannen mit den Stirnflächen 12 eine gemeinsame Ebene auf.

Jede der beiden Stirnflächen 12 der Formbackenhälfte 10 ist mit einer der Anzahl Einsatz-Formelemente 20 und 22 entsprechenden Anzahl ersten Aussparungen 30 ausgebildet, die an die halbzylinderartige Grundfläche 14 der Formbackenhälfte 10 angrenzen. Die beiden Stirnflächen 28 des jeweiligen Einsatz-Formelementes 20, 22 sind mit zweiten Aussparungen 32 ausgebildet, die an die entsprechende Stirnfläche 12 der Formbackenhälfte 10 angrenzend vorgesehen sind, so daß die ersten und die zweiten Aussparungen 30 und 32 jeweils eine gemeinsame Aussparung bilden, die zur Aufnahme eines Fixierelementes 34 dient. Die Fixierelemente 34 sind beispielsweise plättchenförmig mit einem abgestuften Durchgangsloch 36 ausgebildet. Durch das jeweilige Durchgangsloch 36 ist in ein zugehöriges Gewindesackloch 38 in der Formbackenhälfte 10 eine Schraube 40 eingeschraubt, um das jeweilige Fixierelement 34 in der ersten Aussparung 30 zu fixieren und das zugehörige Einsatzformelement 20 oder 22 mit der Formbackenhälfte 10 fest und derartig zu verbinden, daß die Stirnflächen 12 der Formbackenhälfte 10 und die Stirnflächen 28 der Einsatz-Formelemente 20, 22 miteinander plan fluchten, wie aus den Figuren 2 und 3 deutlich ersichtlich ist. Die Fixierelemente 34 sind derartig dimensioniert, daß auch ihre Stirnfläche 42 mit den Stirnflächen 12 und 28 plan fluchtet.

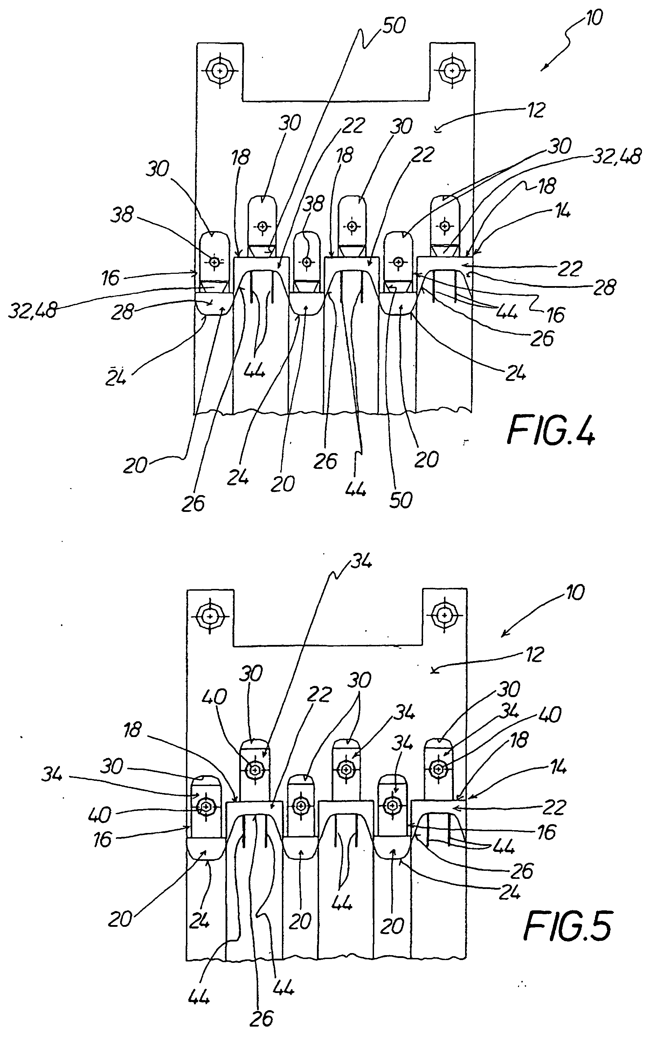

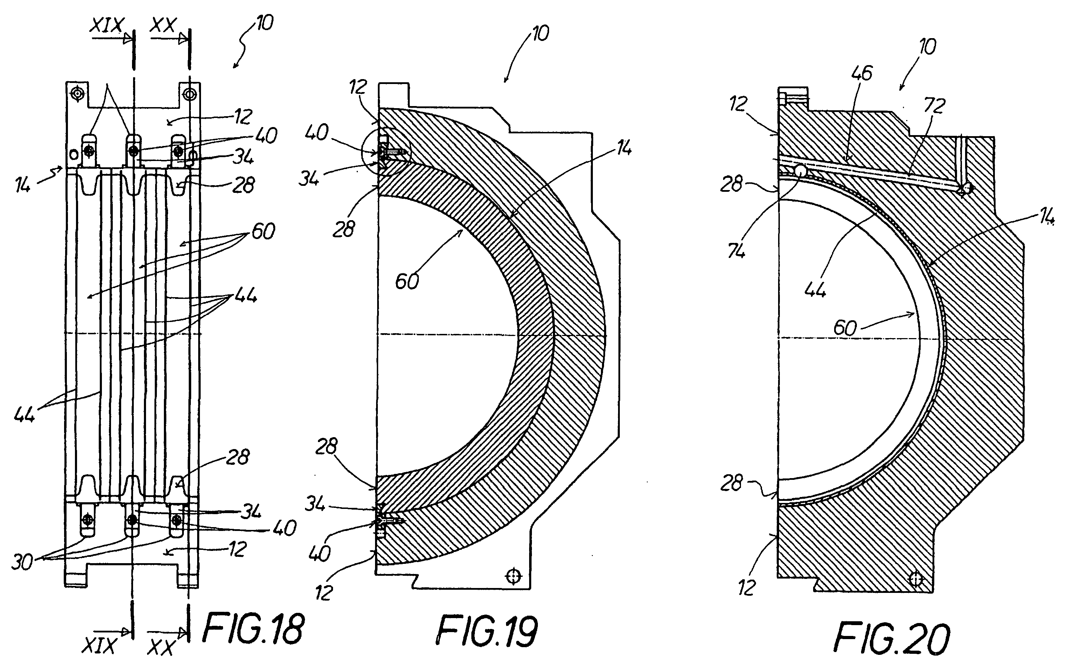

Figur 4 verdeutlicht abschnittweise eine Formbackenhälfte 10 mit einer halbzylinderartigen Grundfläche 14, die - wie bei der Ausbildung gemäß Figur 1 - Kämme 16 und Rinnen 18 aufweist, wobei an den Kämmen 16 Einsatz-Formelemente 20 und in den Rinnen 18 Einsatz-Formelemente 22 - der Ausbildung gemäß Figur 1 entsprechend - vorgesehen sind, deren Querschnitt-Randkonturen 24 und 26 aneinander direkt und unmittelbar angrenzen. Die Figur 4 verdeutlicht insbesondere Vakuumschlitze 44, die in den Einsatz-Formelementen 22 ausgebildet sind, um bei der Herstellung des jeweiligen Querrippenrohres das extrudierte Rohrmaterial an die konkave Querschnitt-Randkontur 26 der Einsatz-Formelemente 22 anzuschmiegen. Dabei wird das Rohrmaterial selbstverständlich automatisch an die konvexe Querschnitt-Randkontur 24 der Einsatz-Formelemente 20 angeschmiegt. Die Vakuumschlitze 44 sind mit einem in Figur 4 nicht gezeichneten Vakuum-Kanalsystem der zugehörigen Formbackenhälfte 10 strömungstechnisch verbunden. Dieses Vakuumkanalsystem wird weiter unten in Verbindung mit Figur 20 beschrieben, wo es mit der Bezugsziffer 46 bezeichnet ist.

Die Figur 4 verdeutlicht außerdem, daß die Einsatz-Formelemente 20 und 22 jeweils rückseitig, d.h. an ihrer von der Querschnitt-Randkontur 24, 26 radial abgewandten Seite mit einem Befestigungsorgan 48 ausgebildet sind. Bei dieser Ausführungsform sind die Befestigungsorgane 48 mit einem trapezförmigen Querschnitt nach Art einer Schwalbenschwanzführung ausgebildet. Die Kämme 16 und Rinnen 18 aufweisende halbzylinderartige Grundfläche 14 der Formbackenhälfte 10 ist mit den Befestigungsorganen 48 querschnittmäßig entsprechenden Befestigungsrinnen 50 ausgebildet.

Gleiche Einzelheiten sind in den Figuren 1 bis 3 und in Figur 4 jeweils mit denselben Bezugsziffern bezeichnet.

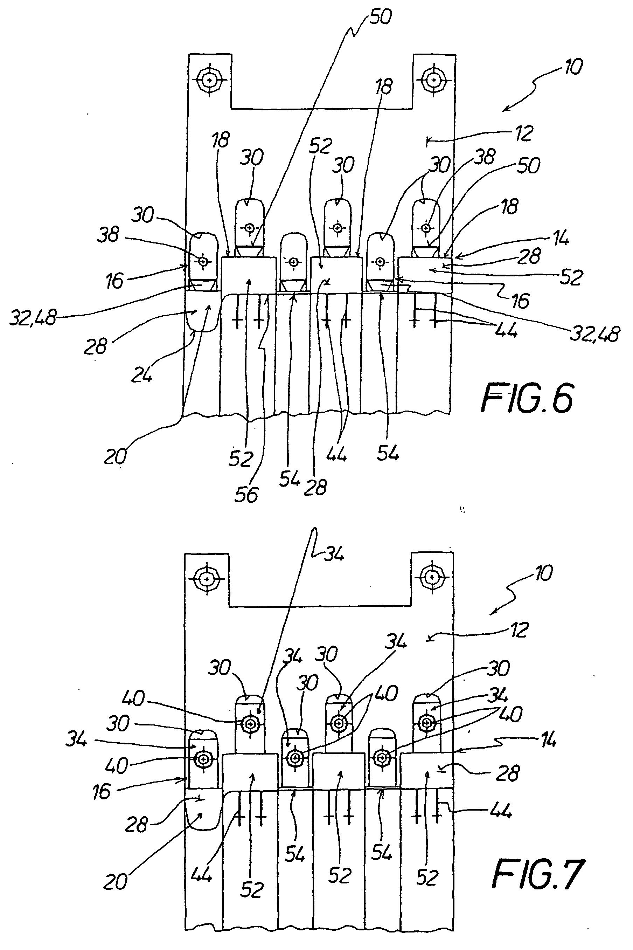

Die Figur 5 unterscheidet sich von der Figur 4 nur dadurch, daß die Einsatz-Formelemente 20 und 22 mit Hilfe der Fixierelemente 34 an der halbzylinderartigen Grundfläche 14 der Formbackenhälfte 10 unbeweglich befestigt, d.h. fixiert, sind. Gleiche Einzelheiten sind in Figur 5 mit denselben Bezugsziffern wie in den Figuren 1 bis 4 bezeichnet, so daß es sich erübrigt, in Verbindung mit Figur 5 alle diese Einzelheiten noch einmal detailliert zu beschreiben.

Die Figuren 6 und 7 zeigen eine Ausbildung der Formbackenhälfte 10 ohne Fixierelemente (sh. Figur 6) und mit Fixierelementen 34 (sh. Figur 7), wobei die halbzylinderartige Grundfläche 14 der Formbackenhälfte 10 - wie die Ausbildungen gemäß den Figuren 1 bis 5 - mit sich axial abwechselnden Kämmen 16 und Rinnen 18 ausgebildet ist. Bei der Ausführungsform gemäß den Figuren 6 und 7 ist jedoch nur an einem Kamm 16 ein Einsatz-Formelement 20 mit einer konvexen Querschnitt-Randkontur 24 angebracht, während die restlichen Kämme 16 und Rinnen 18 mit Einsatz-Formelementen 52 und 54 kombiniert sind, durch die eine glatte Oberfläche 56 der Formbackenhälfte 10 und somit eine entsprechend glatte Außenoberfläche des herzustellenden Querrippenrohres realisiert wird. Im übrigen ist die Ausbildung der Formbackenhälfte 10 gemäß den Figuren 6 und 7 der Ausbildung gemäß den Figuren 4 und 5 ähnlich, so daß es sich erübrigt, in Verbindung mit den Figuren 6 und 7 alle Einzelheiten, die in den Figuren 6 und 7 mit denselben Bezugsziffern wie in den Figuren 4 und 5 bezeichnet sind, noch einmal detailliert zu beschreiben.

Die Figuren 4 und 5 sowie 6 und 7 sollen insbesondere dazu dienen, zu verdeutlichen, daß die Formbackenhälfte 10 wunschgemäß mit beliebigen Einsatz-Formelementen 20, 22, 52, 54 kombiniert sein kann, um Querrippenrohre mit der jeweils gewünschten Außenoberfläche zu realisieren. Die jeweiligen Einsatz-Formelemente 20, 22, 52, 54 können wunschgemäß auch durch entsprechende andere Formelemente ersetzt werden. Zu diesem Zwecke ist es nur notwendig, die entsprechenden Fixierelemente 34 zu lösen, die Formelemente auszutauschen und die neuen Formelemente wieder mit Hilfe der Fixierelemente 34 an der Formbackenhälfte 10 zu fixieren.

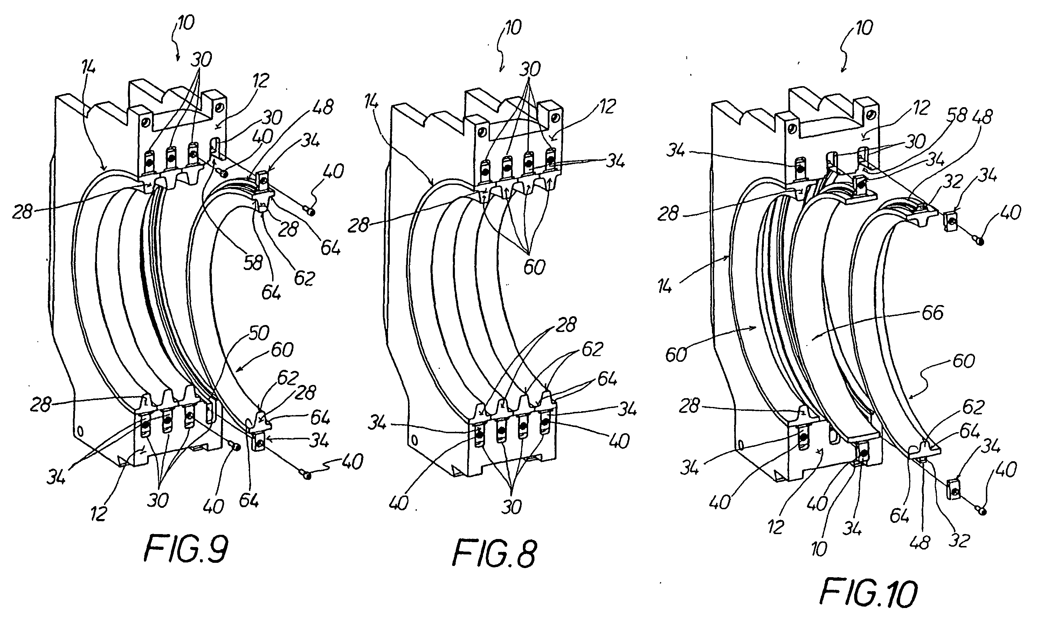

Die Figuren 8 und 9 zeigen in einer räumlichen Darstellung eine Formbackenhälfte 10, bei der die halbzylinderartige Grundfläche 14 nicht mit Kämmen und Rinnen sondern einfach halbzylindrisch mit voneinander axial beabstandeten Rillen 58 ausgebildet ist, wobei jeder Rille 58 ein Einsatz-Formelement 60 zugeordnet ist. Das jeweilige Einsatz-Formelement 60 weist axial mittig eine konvexe Querschnitt-Rippenrandkontur 62 auf, an die beidseitig jeweils eine halbe konkave Querschnitt-Rinnenrandkontur 64 anschließt. Im zusammengebauten Zustand schließen die Einsatz-Formelemente 60 eng und stufenlos aneinander an, um eine der Außenoberfläche des herzustellenden Querrippenrohres entsprechende Innenoberfläche zu bilden. Die Fixierung der Einsatz-Formelemente 60 in der Formbackenhälfte 10 erfolgt wiederum mit Hilfe von Fixierelementen 34 bzw. mit Hilfe von Schrauben 40 zur Befestigung der Fixierelemente 34 in den Aussparungen 30 in den Stirnflächen 12 der Formbackenhälfte 10.

Auch bei dieser Ausbildung ist jedes Einsatz-Formelement 60 rückseitig mit einem Befestigungsorgan 48 ausgebildet, das sich in Umfangsrichtung entlang des zugehörigen Einsatz-Formelementes 60 erstreckt und das an die jeweilige Stirnfläche 28 angrenzend mit einer zweiten Aussparung 32 (sh. beispielsweise die Figuren 2 und 3) ausgebildet ist.

In Figur 10 ist eine Formbackenhälfte 10 perspektivisch dargestellt, die sich von der Ausführungsform gemäß den Figuren 8 und 9 insbesondere dadurch unterscheidet, daß zwischen Einsatz-Formelementen 60, von welchen das rechts gezeichnete von der Formbackenhälfte 10 beabstandet, d.h. in einer Explosionsdarstellung verdeutlicht ist, ein Halbring-Formelement 66 vorgesehen ist. Während mit Formbackenhälften 10 gemäß den Figuren 8 und 9 in einem an sich bekannten Corrugator Querrippenrohre mit Wellentälem und Wellenbergen realisiert werden, bei welchen die Wellenberge und die Wellentäler axial mindestens annähernd gleiche Abmessungen besitzen, wird mit Formbackenhälften 10 gemäß Figur 10 ein Querrippenrohr realisiert, bei dem die Wellenberge axial im Vergleich zur axialen Länge der Wellentäler lang sind.

Gleiche Einzelheiten sind in den Figuren 8, 9 und 10 mit denselben Bezugsziffem wie in den Figuren 1 bis 7 bezeichnet, so daß es sich erübrigt, in Verbindung mit den Figuren 8 bis 10 alle diese Einzelheiten noch einmal detailliert zu beschreiben.

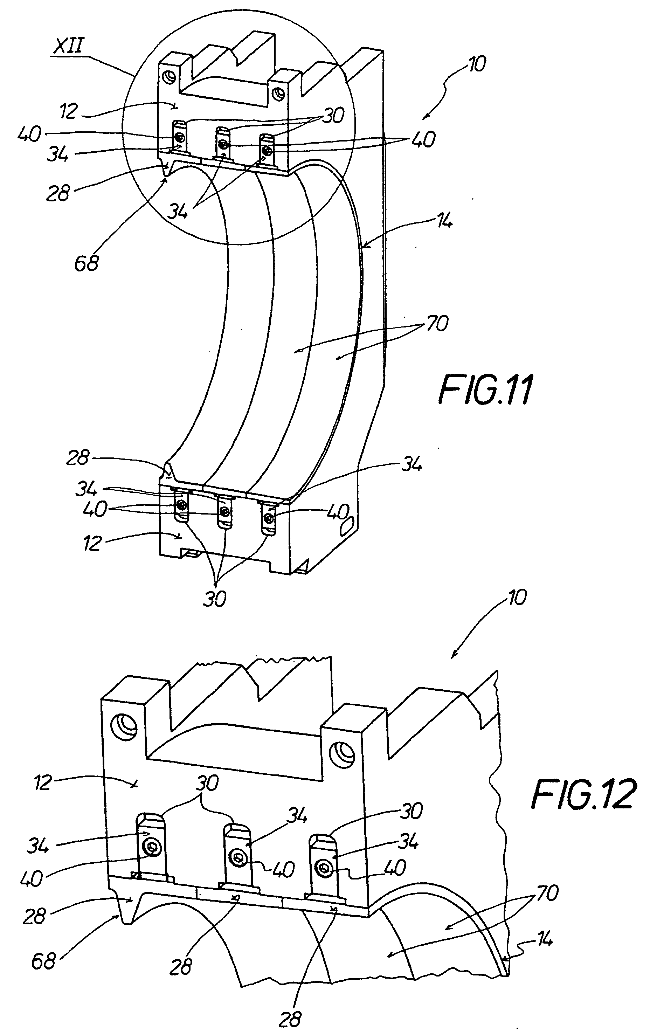

Die Figuren 11 und 12 sollen eine Ausbildung der Formbackenhälfte 10 verdeutlichen, wobei die halbzylinderartige Grundfläche 14 zwischen den beiden Stirnflächen 12 halbzylindrisch mit voneinander axial beabstandeten Rillen 58 - ähnlich wie bei den Ausbildungen gemäß den Figuren 8, 9 und 10 - gestaltet sind. An der halbzylindrischen Grundfläche 14 sind mit Hilfe von Fixierelementen 34 bzw. Schrauben 30 Einsatz-Formelemente 68, 70 fixiert, die zur Realisierung eines Querrippenrohres - ähnlich wie die Ausbildung gemäß Figur 7 - geeignet und vorgesehen sind.

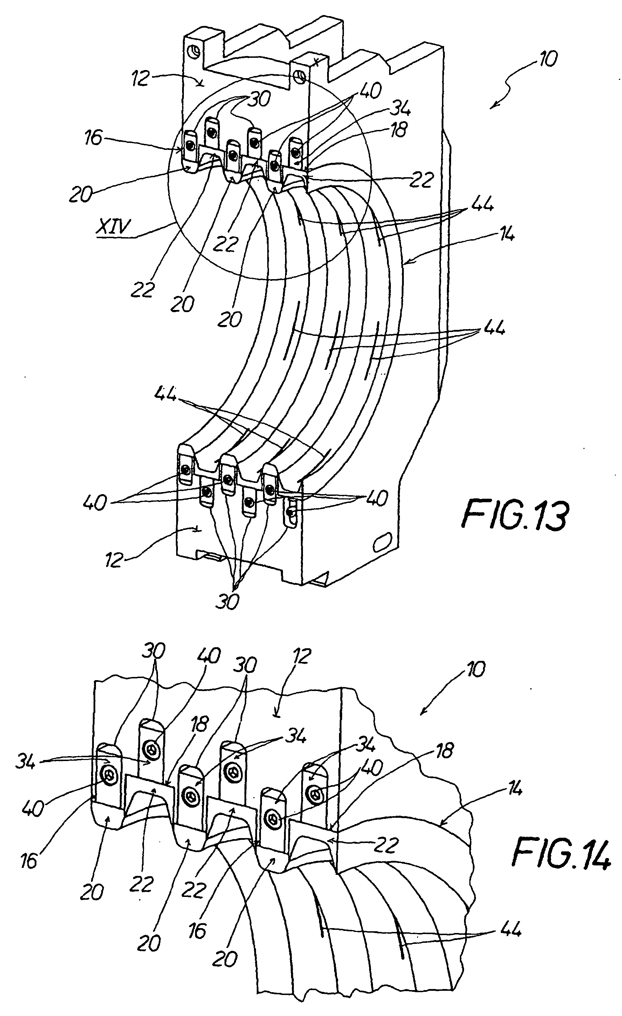

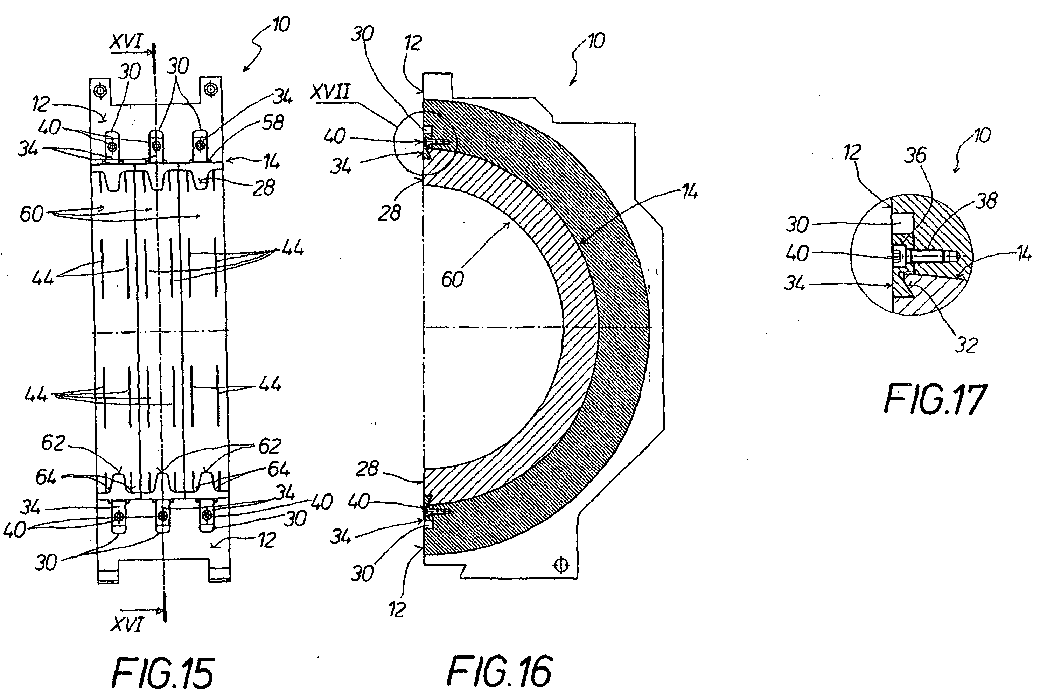

Die Figuren 13 und 14 verdeutlichen eine Formbackenhälfte 10, die ähnlich wie die Formbackenhälfte gemäß Figur 1 ausgebildet ist, wobei die in den Rinnen 18 der halbzylinderartigen Grundfläche 14 der Formbackenhälfte 10 fixierten zweiten Einsatzformelemente 22 mit Vakuumschlitzen 44 ausgebildet sind.

Gleiche Einzelheiten sind in den Figuren 13 und 14 mit denselben Bezugsziffern wie in den Figuren 1 bis 12 bezeichnet, so daß es sich erübrigt, in Verbindung mit den Figuren 13 und 14 alle Einzelheiten noch einmal detailliert zu beschreiben.

Die Figur 15 zeigt in einer Stimansicht eine Formbackenhälfte 10 - ähnlich den in den Figuren 8, 9, 10 und 11 bzw. 12 gezeichneten Ausführungsformen der Formbackenhälfte 10 - , wobei die halbzylinderartige Grundfläche 14 halbzylindrisch mit voneinander axial beabstandeten Rillen 58 ausgebildet ist. Wie insbesondere aus den Figuren 8 und 10 ersichtlich ist, sind die an der Rückseite der Einsatz-Formelemente 60 vorgesehenen Befestigungsorgane 48 einfach mit einem rechteckförmigen Querschnitt gestaltet. Entsprechend sind die Befestigungsrinnen 50 mit einem rechteckförmigen lichten Querschnitt ausgebildet, so daß es einfach und zeitsparend möglich ist, die Einsatz-Formelemente 60 nicht in Umfangsrichtung in die Formbackenhälfte 10 einfädeln zu müssen, sondern die Einsatz-Formelemente 60 einfach von der Seite in die Formbackenhälfte 10 einstellen zu können. Danach werden die Einsatz-Formelemente 60 mit Hilfe von Fixierelementen 34 in der Formbackenhälfte 10 mit Hilfe von Schrauben 40 fixiert. Die Einsatz-Formelemente 60 sind mit Vakuumschlitzen 44 ausgebildet.

Die Figur 16 zeigt einen Schnitt entlang der Schnittlinie XVI-XVI in Figur 15 durch die Formbackenhälfte 10 und durch ein mit dieser fest verbundenes Einsatz-Formelement 60 sowie durch die beiden das entsprechende Einsatz-Formelement 60 fixierenden Fixierelemente 34. Die Figur 17 zeigt das Detail XVII in Figur 16. Gleiche Einzelheiten sind auch in den Figuren 15 bis 17 mit den gleichen Bezugsziffern wie in den Figuren 1 bis 14 bezeichnet.

Die Figur 18 zeigt eine Formbackenhälfte 10 ähnlich der in Figur 15 zeichnerisch dargestellten Formbackenhälfte, wobei die Einsatz-Formelemente 60 jedoch mit Vakuumschlitzen 44 ausgebildet sind, die sich entlang der gesamten Umfangserstreckung des jeweiligen Einsatz-Formelementes 60 erstrecken, wie insbesondere auch aus Figur 20 ersichtlich ist. Die Vakuumschlitze 44 sind mit dem in der Formbackenhälfte 10 ausgebildeten Vakuumkanalsystem 46 strömungstechnisch verbunden, das bereits weiter oben erwähnt worden ist. Das Vakuumkanalsystem 46 weist einen ersten Kanalabschnitt 72 auf, der mit einer (nicht gezeichneten) Vakuumquelle verbindbar ist und der aus einer der Stimflächen 12 der Formbackenhälfte 10 ausmündet, um die zusammengehörenden Formbackenhälften 10 mit der Vakuumquelle zu vebinden. Der erste Kanalabschnitt 72 ist mit mindestens einem zweiten Kanalabschnitt 74 strömungstechnisch verbunden, der in die Vakuumschlitze 44 ausmündet. Erstrecken sich die Vakuumschlitze 44 über die gesamte Umfangslänge des jeweiligen Einsatz-Formelementes 60, dann kann ein einziger zweiter Kanalabschnitt 74 ausreichend sein. Sind die Einsatz-Formelemente 60 - wie beispielsweise in Figur 15 dargestellt- mit kurzen und voneinander beabstandeten Vakuum-Schlitzen 44 ausgebildet, dann ist es selbstverständlich erforderlich, den jeweiligen Vakuumschlitz-Gruppen jeweils einen zugehörigen zweiten Kanalabschnitt 74 zuzuordnen.

In den Zeichnungsfiguren sind diverse Ausbildungen der Formbackenhälfte 10 mit unterschiedlichen Einsatz-Formelementen zur Realisierung entsprechender Querrippenrohre verdeutlicht, wobei es sich versteht, daß die Erfindung nicht auf die in den Zeichnungsfiguren dargestellten Ausführungsformen beschränkt ist sondern durch die Ansprüche bestimmt wird.

## Patentansprüche

1. Formbackenhälfte für einen Corrugator zum Herstellen von Querrippenrohren, wobei die Formbackenhälfte (10) zwei voneinander beabstandete, in einer gemeinsamen Ebene angeordnete Stirnflächen (12) und eine die beiden Stirnflächen (12) verbindende halbzylinderartige Grundfläche (14) aufweist, an der die Außenoberfläche des Querrippenrohres bestimmende halbkreisbogenförmige Einsatz-Formelemente (20, 22; 52, 54; 60; 66; 68, 70) loslösbar angebracht sind, die jeweils zwei sich diametral gegenüberliegende Formelement-Stirnflächen (28) aufweisen, die mit den Stirnflächen (12) der Formbackenhälfte (10) plan fluchten, wobei jede der beiden Stirnflächen (12) der Formbackenhälfte (10) an die halbzylinderartige Grundfläche (14) angrenzend mit einer der Anzahl Einsatz-Formelemente entsprechenden Anzahl ersten Aussparungen (30) und die beiden Formelement-Stirnflächen (28) des jeweiligen Einsatz-Formelementes an die beiden Stirnflächen (12) der Formbackenhälfte (10) angrenzend mit jeweils einer zweiten Aussparung (32) ausgebildet sind, wobei sich zwischen der jeweiligen ersten Aussparung (30) und der zugehörigen zweiten Aussparung (32), zum Festlegen des jeweiligen Einsatz-Formelementes an der Formbackenhälfte (10), ein Fixierelement (34) erstreckt.

2. Formbackenhälfte nach Anspruch 1,
**dadurch gekennzeichnet,**
**daß** eines oder mehrere der Einsatzformelemente konvexe Querschnittsrandkontur aufweist bzw. aufweisen.

3. Formbackenhälfte nach Anspruch 1 oder 2,
**dadurch gekennzeichnet,**
**daß** eines oder mehrere der Einsatzformelemente konkave Querschnittsrandkonturen aufweist bzw. aufweisen.

4. Formbackenhälfte nach einem der vorangehenden Ansprüche,
**dadurch gekennzeichnet,**
**daß** eines oder mehrere der Einsatzformelemente (60) axial mittig eine konvexe Querschnitts-Rippenrandkontur (62) und an diese beidseitig anschließend jeweils eine halbe konkave Querschnitts-Rinnenrandkontur (64) aufweist.

5. Formbackenhälfte nach einem der vorangehenden Ansprüche,
**dadurch gekennzeichnet,**
**daß** eines oder mehrere der Einsatzformelemente als Halbringformelemente mit zylindrischer Querschnittsrandkontur ausgebildet ist bzw. sind.

6. Formbackenhälfte nach einem der vorangehenden Ansprüche,
**dadurch gekennzeichnet,**
**daß** identisch ausgebildete Einsatzformelemente in axialer Richtung nebeneinander angeordnet sind.

7. Formbackenhälfte nach einem der vorangehenden Ansprüche,
**dadurch gekennzeichnet,**
**daß** unterschiedlich ausgebildete Einsatzformelemente in axialer Richtung nebeneinander angeordnet sind.

8. Formbackenhälfte nach einem der vorangehenden Ansprüche,
**dadurch gekennzeichnet,**
**daß** die Querschnittsrandkonturen zweier benachbarter Einsatzformelemente aneinander direkt und unmittelbar angrenzen, vorzugsweise derart, daß einander benachbarte Einsatzformelemente allein die Außenoberfläche des herzustellenden Querrippenrohres bestimmen.

9. Formbackenhälfte nach einem der vorangehenden Ansprüche,
**dadurch gekennzeichnet,**
**daß** die Querschnittsrandkonturen zweier benachbarter Einsatzformelemente einen Abstand zueinander aufweisen, der durch einen entsprechenden Abschnitt der Formbackenhälfte überbrückt ist, vorzugsweise derart, daß benachbarte Einsatzformelemente gemeinsam mit diesem überbrückenden Abschnitt der Formbackenhälfte die Außenoberfläche des herzustellenden Querrippenrohres bestimmen.

10. Formbackenhälfte nach einem der vorangehenden Ansprüche,
**dadurch gekennzeichnet,**
**daß** die halbzylinderartige Grundfläche voneinander axial beabstandete Rillen aufweist, wobei jeder Rille jeweils ein separates Einsatzformelement (20, 22; 52, 54; 60; 66; 68, 70) lösbar zugeordnet ist, wobei die Querschnittsrandkontur der Einsatzformelemente identisch oder unterschiedlich ausgebildet ist.

11. Formbackenhälfte nach einem der vorangehenden Ansprüche,
**dadurch gekennzeichnet,**
**daß** die halbzylinderartige Grundfläche (14) der Formbackenhälfte (10) mit sich in axialer Richtung abwechselnden Kämmen (16) und Rinnen (18) ausgebildet ist, wobei an mindestens einem der Kämme (16) ein Einsatzformelement (20) mit einer konvexen Querschnittsrandkontur (24) angebracht ist.

12. Formbackenhälfte nach Anspruch 11,
**dadurch gekennzeichnet,**
**daß** jeweils an den Kämmen (16) Einsatzformelemente (20) mit einer konvexen Querschnittsrandkontur (24) und in den Rinnen (18) Einsatzformelemente (22) mit einer konkaven Querschnittsrandkontur (26) oder Halbringformelemente mit zylindrischer Querschnittsrandkontur angebracht sind.

13. Formbackenelemente nach einem der vorangehenden Ansprüche,
**dadurch gekennzeichnet,**
**daß** zwischen Einsatzformelementen (60), die eine konvexe Querschnitts-Rippenrandkontur (62) und an diese beidseitig anschließend jeweils eine halbe konkave Querschnitts-Rinnenrandkontur (64) aufweisen, mindestens ein Halbring-Formelement (66) angeordnet ist, wobei das mindestens eine Halbringformelement (66) an das benachbarte Einsatzformelement (60) stufenlos anschließt.

14. Formbackenhälfte nach einem der vorangehenden Ansprüche,
**dadurch gekennzeichnet,**
**daß** jedes Einsatzformelement (20, 22; 52, 54; 60, 66; 68, 70) rückseitig mit einem Befestigungsorgan (48) ausgebildet ist, das in eine daran querschnittsmäßig angepaßte Befestigungsrinne (50) in der halbzylinderartigen Grundfläche (14) der Formbackenhälfte (10) eingepaßt ist.

15. Formbackenhälfte nach Anspruch 14,
**dadurch gekennzeichnet,**
**daß** das Befestigungsorgan (48) und die daran formmäßig angepaßte Befestigungsrinne (50) mit einem einfach rechteckförmigen Querschnittsprofil ausgebildet sind oder hinterschnitten, vorzugsweise schwalbenschwanzförmig komplementär ausgebildet sind.

16. Formbackenhälfte nach einem der vorangehenden Ansprüche,
**dadurch gekennzeichnet,**
**daß** die Einsatzformelemente (22; 60) mit Vakuumschlitzen (44) und daß die Formbackenhälfte (10) mit einem Vakuumkanalsystem (46) ausgebildet sind.

17. Formbackenhälfte nach Anspruch 16,
**dadurch gekennzeichnet,**
**daß** das Vakuumkanalsystem (46) mindestens einen aus einer der Stirnflächen (12) der Formbackenhälfte (10) ausmündenden, mit einer Vakuumquelle verbindbaren ersten Kanalabschnitt (72) und mindestens einen mit diesem verbundenen zweiten Kanalabschnitt (74) aufweist, der in die Vakuumschlitze (44) ausmündet.

## Claims

1. Shaping chuck halves for a corrugator for the manufacture of transverse ribbed pipes, whereby the shaping chuck halves (10) have two face surfaces (12) arranged in a common plane but separated from one another, and a semi-cylindrical base surface (14) connecting the two face surfaces (12), on which are located in a releasable manner insert shaping elements (20, 22; 52, 54; 60; 66; 68, 70) in the shape of semicircular arcs, determining the outer surface of the transverse ribbed pipe, said elements having in each case two diametrically-opposed shaping element face surfaces (28), which come flush with the face surfaces (12) of the shaping chuck halves (10), whereby each of the two face surfaces (12) of the shaping chuck halves (10) are formed at the semi-cylindrical base surface (14) delimited by a number of first cut-outs or recesses (30), corresponding to the number of insert elements, and the two shaping element face surfaces (28) of the individual insert shaping element in each case are formed at the two face surfaces (12) of the shaping chuck halves (10) delimited in each case by a second cut-out or recess (32), whereby a fixing element (34) extends between the first cut-out or recess (30) in each case and the second cut-out or recess (32) pertaining to the first, for securing the individual insert shaping elements to the shaping chuck halves (10).

2. Shaping chuck halves according to Claim 1, **characterised in that** one or more of the insert shaping elements has/have convex cross-sectional edge contours.

3. Shaping chuck halves according to Claim 1 or 2, **characterised in that** one or more of the insert shaping elements has/have concave cross-sectional edge contours.

4. Shaping chuck halves according to one of the foregoing claims, **characterised in that** one or more of the insert shaping elements has/have, axially and centrally, a convex cross-sectional ribbed edge contour (62) and, connecting to this in each case on both sides, a half-concave cross-sectional edge contour (54).

5. Shaping chuck halves according to one of the foregoing claims, **characterised in that** one or more of the insert shaping elements is or are designed as half-ring shaped elements with a cylindrical cross-sectional edge contour.

6. Shaping chuck halves according to one of the foregoing claims, **characterised in that** identically shaped insert shaping elements are arranged in the axial direction next to one another.

7. Shaping chuck halves according to one of the foregoing claims, **characterised in that** differently shaped insert shaping elements are arranged in the axial direction next to one another.

8. Shaping chuck halves according to one of the foregoing claims, **characterised in that** the cross-sectional edge contours of two adjacent insert shaping elements delimit one another directly and immediately, preferably in such a way that insert shaping elements adjacent to one another alone determine the outer surface of the transverse ribbed pipe which is to be manufactured.

9. Shaping chuck halves according to one of the foregoing claims, **characterised in that** the cross-sectional edge contours of two adjacent insert shaping elements have a distance interval between one another which is bridged by a corresponding section of the shaping chuck halves, preferably in such a way that adjacent insert shaping elements, jointly with this bridging section of the shaping chuck halves, determine the outer surface of the transverse ribbed pipe which is to be manufactured.

10. Shaping chuck halves according to one of the foregoing claims, **characterised in that** the semi-cylindrical base surface has grooves, spaced axially apart from one another, whereby each groove in each case is allocated in a releasable manner to a separate insert shaping element (20, 22; 52, 54; 60; 66; 68, 70), whereby the cross-sectional edge contour of the insert shaping element is formed identically or differently.

11. Shaping chuck halves according to one of the foregoing claims, **characterised in that** the semi-cylindrical base surface (14) of the shaping chuck half (10) is formed with comb elements (16) and grooves (18) alternating in the axial direction, whereby an insert shaping element (20) with a convex cross-sectional edge contour (24) is located on at least one of the comb elements (16).

12. Shaping chuck halves according to Claim 11, **characterised in that** in each case insert shaping elements (20) with a convex cross-sectional edge contour (24) are located at the comb elements (16), and located in the grooves (18) are insert shaping elements (22) with a concave cross-sectional edge contour (26) or half-ring shaping elements with a cylindrical cross-sectional edge contour.

13. Shaping chuck halves according to one of the foregoing claims, **characterised in that** arranged between insert shaping elements (60), which have a convex cross-sectional rib edge contour (62) and in each case a half-concave cross-sectional groove edge contour (64) connecting to this, is at least one half-ring shaping element (66), whereby the at least one half-ring shaping element (66) connects steplessly to the adjacent insert shaping element (60).

14. Shaping chuck halves according to one of the foregoing claims, **characterised in that** each insert shaping element (20, 22; 52, 54; 60; 66; 68, 70) is formed on the rear with a securing element (48), which fits into a securing groove (50), matched to it in terms of the cross-section, in the semi-cylindrical base surface (14) of the shaping chuck half (10).

15. Shaping chuck halves according to Claim 14, **characterised in that** the securing element (48) and the securing groove (50) matched to it in shape are formed with a simple rectangular cross-sectional profile or are formed cut behind, preferably in dovetail pattern, so as to be complementary to one another.

16. Shaping chuck halves according to one of the foregoing claims, **characterised in that** the insert shaping elements (22, 60) are formed with vacuum slots (44), and that the shaping chuck halves (10) are formed with a vacuum channel system (46).

17. Shaping chuck halves according to Claim 16, **characterised in that** the vacuum channel system (46) has at least one first channel section (72), opening out of one of the face surfaces (12) of the shaping chuck halves (10), capable of being connected to a vacuum source, and connected to this at least one second channel section (74), which opens into a vacuum slot (44).

## Revendications

1. Moitié de moule pour une machine à onduler pour la fabrication de tubes à nervures transversales, la moitié de moule (10) comprenant deux surfaces frontales (12) placées à distance l'une de l'autre, disposées sur un plan commun, et une surface de base à mode de demi-cylindre (14) reliant les deux surfaces frontales (12), surface sur laquelle les éléments de moule à insertion (20, 22 ; 52, 54 ; 60 ; 66 ; 68, 70) en forme d'arc en demi-cercle, déterminant la surface externe du tube à nervures transversales, sont montés de manière détachable, éléments qui comprennent chacun deux surfaces frontales d'élément de moule (28) diamétralement opposées qui coïncident de manière plane avec les surfaces frontales (12) de la moitié de moule (10), chacune des deux surfaces frontales (12) de la moitié de moule (10) étant réalisée, de manière adjacente à la surface de base à mode de demi-cylindre (14), avec un nombre de premiers évidements (30) correspondant au nombre d'éléments de moule à insertion et les deux surfaces frontales d'élément de moule (28) de l'élément de moule à insertion respectif étant réalisées, de manière adjacente aux deux surfaces frontales (12) de la moitié de moule (10), avec un second évidement (32), un élément de fixation (34) s'étendant entre le premier évidement respectif (30) et le second évidement associé (32) pour la fixation de l'élément de moule à insertion respectif sur la moitié de moule (10).

2. Moitié de moule selon la revendication 1, **caractérisée en ce qu'**un ou plusieurs des éléments de moule à insertion présente(nt) un contour convexe de bordure en coupe transversale.

3. Moitié de moule selon la revendication 1 ou 2, **caractérisée en ce qu'**un ou plusieurs des éléments de moule à insertion présente(nt) des contours concaves de bordure en coupe transversale.

4. Moitié de moule selon l'une quelconque des revendications précédentes, **caractérisée en ce qu'**un ou plusieurs des éléments de moule à insertion (60) présente(nt), au centre, de manière axiale, un contour convexe de bordure à nervure en coupe transversale (62) et un demi-contour concave de bordure à sillon en coupe transversale (64) s'y rattachant des deux côtés.

5. Moitié de moule selon l'une quelconque des revendications précédentes, **caractérisée en ce qu'**un ou plusieurs des éléments de moule à insertion est/sont réalisé(s) en tant qu'éléments de moule semi-circulaires avec un contour cylindrique de bordure en coupe transversale.

6. Moitié de moule selon l'une quelconque des revendications précédentes, **caractérisée en ce que** des éléments de moule à insertion configurés de manière identique sont disposés les uns à côté des autres dans la direction axiale.

7. Moitié de moule selon l'une quelconque des revendications précédentes, **caractérisée en ce que** des éléments de moule à insertion configurés différemment sont disposés les uns à côté des autres dans la direction axiale.

8. Moitié de moule selon l'une quelconque des revendications précédentes, **caractérisée en ce que** les contours de bordure en coupe transversale de deux éléments de moule à insertion contigus sont directement et immédiatement adjacents, de préférence de telle sorte que des éléments de moule à insertion contigus déterminent seuls la surface externe du tube à nervures transversales à fabriquer.

9. Moitié de moule selon l'une quelconque des revendications précédentes, **caractérisée en ce que** les contours de bordure en coupe transversale de deux éléments de moule à insertion contigus présentent un espace entre eux, lequel est recouvert par une section correspondante de la moitié de moule, de préférence de telle sorte que des éléments de moule à insertion contigus déterminent, conjointement à cette section de recouvrement de la moitié de moule, la surface externe du tube à nervures transversales à fabriquer.

10. Moitié de moule selon l'une quelconque des revendications précédentes, **caractérisée en ce que** la surface de base à mode de demi-cylindre présente des rainures placées à distance l'une de l'autre dans le sens axial, à chaque rainure étant associé de manière détachable un élément de moule à insertion séparé (20, 22 ; 52, 54 ; 60 ; 66 ; 68, 70), le contour de bordure en coupe transversale des éléments de moule à insertion étant configuré de manière identique ou différente.

11. Moitié de moule selon l'une quelconque des revendications précédentes, **caractérisée en ce que** la surface de base à mode de demi-cylindre (14) de la moitié de moule (10) est configurée avec des crêtes (16) et des sillons (18) s'alternant dans la direction axiale, un élément de moule à insertion (20), avec un contour convexe de bordure en coupe transversale (24) étant monté sur au moins l'une des crêtes (16).

12. Moitié de moule selon la revendication 11, **caractérisée en ce que**, sur les crêtes (16), sont montés des éléments de moule à insertion (20) avec un contour convexe de bordure en coupe transversale (24) et, dans les sillons (18), des éléments de moule à insertion (22) avec un contour concave de bordure en coupe transversale (26) ou des éléments de moule semi-circulaires avec un contour cylindrique de bordure en coupe transversale.

13. Eléments de moule selon l'une quelconque des revendications précédentes, **caractérisés en ce qu'**entre les éléments de moule à insertion (60), qui présentent un contour convexe de bordure à nervure et en coupe transversale (62) et un contour concave de bordure à sillon et en coupe transversale (64) se rattachant à celle-ci des deux côtés, est disposé au moins un élément de moule semi-circulaire (66), l'élément de moule semi-circulaire (66) minimal se raccordant sans gradations à l'élément de moule à insertion contigu (60).

14. Moitié de moule selon l'une quelconque des revendications précédentes, **caractérisée en ce que** chaque élément de moule à insertion (20, 22 ; 52, 54 ; 60 ; 66 ; 68, 70) est configuré à l'arrière avec un organe de fixation (48) qui est encastré dans un canal de fixation (50), adapté à celui-ci au niveau de la coupe transversale, dans la surface de base à mode de demi-cylindre (14) de la moitié de moule (10).

15. Moitié de moule selon la revendication 14, **caractérisée en ce que** l'organe de fixation (48) et le canal de fixation (50), adapté à lui du point de vue de la forme, sont configurés ou dégagés avec un profil simplement rectangulaire de coupe transversale, de préférence de manière complémentaire en forme de queue d'aronde.

16. Moitié de moule selon l'une quelconque des revendications précédentes, **caractérisée en ce que** les éléments de moule à insertion (22, 60) sont configurés avec des fentes à vide (44) et **en ce que** la moitié de moule (10) est configurée avec un système de canal à vide (46).

17. Moitié de moule selon la revendication 16, **caractérisée en ce que** le système de canal à vide (46) présente au moins une première partie de canal (72), débouchant de l'une des surfaces frontales (12) de la moitié de moule (10), pouvant être reliée à une source de vide et au moins une seconde partie de canal (74) reliée à la première, seconde partie qui débouche dans les fentes à vide (44).
